# EUROPEAN PATENT SPECIFICATION

(11) **EP 1 659 891 B1**
(45) Date of publication and mention of the grant of the patent: **02.09.2009**
(21) Application number: 04743088.9
(22) Date of filing: 25.06.2004
(51) Int. Cl.: A42B 3/06, A42C 2/00

(54) **SAFETY HELMETS**
SCHUTZHELME
CASQUES PROTECTEURS

(30) Priority: 26.06.2003 GB 0314934
(43) Date of publication of application: 31.05.2006
(73) Proprietor: QinetiQ Limited, London, SW1E 6PD (GB)
(72) Inventor: DAY, Sarah Elizabeth Qinetiq Limited, Farnborough,Hampshire GU14 OLX (GB); FOREMAN, Andrew, David Qinetiq Limited, Farnboroughg,Hampshire GU14 OLX (GB); Huggins, Adrian Qinetiq Limited, Farnborough,Hampshire GU14 0LX (GB); PRICE, Jonathan Anthony Qinetiq Limited, Farnborough,Hampshire GU14 OLX (GB)
(74) Representative: Lowther, Deborah Jane
(86) International application number: PCT/GB2004/002737
(87) International publication number: WO 2005/000059

(56) References cited:
- EP-A- 0 545 182
- EP-A- 0 650 333
- WO-A-90/14025
- FR-A- 2 561 877
- US-A- 5 056 162
- US-A- 6 058 515

## Description

The present invention relates to a polymer composite sandwich (PCS) safety helmet, where the safety helmet can be significantly reduced in mass compared with conventional safety helmets , without any concomitant loss in mechanical strength.

Conventional protective helmets available on the market today cover a wide spectrum of uses ranging from light use for everyday wearing such as motorcycle or bicycle helmets, to professional use helmets such as those found in motorsports. Similarly the price of the helmets range from a few pounds for a bicycle helmet to several hundred thousand pounds (GB) for a Formula 1 racing car helmet. However light use and professional use helmets alike are made using the same basic two layer approach. The helmets are comprised of an inner layer which is typically a thick energy absorbing material, typically a foam, which will be placed adjacent to the wearers head and an outer layer, a hard shell which covers the foam, to provide a protective surface for the foam. The energy absorbing material is relatively stiff and brittle and would be uncomfortable for the user to wear therefore some form of comfort lining is usually required. The comfort lining can take the form of either; soft foams such as those found in bicycle and motorsports helmets, or a suspended lattice of fabric, commonly found in equestrian and cricket helmets and also flexible plastic mountings such as those found inside building site safety helmets.

Helmets which are constructed using the two layer approach typically have relatively high densities and relatively low overall stiffness. To ensure that safety standards for impact protection are met, the energy absorbing foam layer is typically very thick, in the order of several centimetres. As a consequence the helmet is displaced some distance from the wearers head, leading to an increase in the moment of inertia of the helmet in an accident. Further as the thickness and density of the foam increases, to satisfy the safety standards, so the mass of the helmet increases.

A conventional helmet works by dissipating the energy from the point impact over a large area of the energy absorbing foam, which will in turn reduce the total energy at the wearers head. Therefore it is desirable to increase the stiffness of the outer layer, to increase the dissipation of energy from the impact site across a larger area of the energy absorbing foam. Conventional helmet design has been advanced by the development of stiffer outer layers such as fibre reinforced plastics, however these high performance materials can be prohibitively expensive for all but the top price range of safety helmet.

Helmets can be categorised into two distinct design shapes; re-entrant and non re-entrant helmets, a motorcycle helmet which attempts to encapsulate the entire head would be an example of a re-entrant shaped helmet. Whereas a non-re-entrant shaped helmet is essentially hemispherical, i.e. the open faced helmets, such as equestrian or bicycle helmets. It is well known that re-entrant shaped helmets provide additional manufacturing problems over the non re-entrant shaped helmets, which is reflected in the different methods used to construct the two types of helmet. Throughout this specification a reference to helmet or helmets shall include any helmet shape, such as a re-entrant shaped helmet which encloses the wearers head or a non re-entrant shaped helmet substantially hemispherical in shape. It will also appreciated that the helmet may be used in place of any known, or commonly used helmet, by way of example only, such uses may include motorsports i.e. car and motorcycling, bicycling, or can also be used for extreme sports such as hang-gliding, abseiling, canoeing, cricket, equestrian, skating and even for medical helmets for people who are prone to collapsing such as epileptics.

Further it is possible to categorise the helmet depending on the level of protection required. First there are manufacturers who produce bespoke helmets for 'professional use', such as building site safety helmets, professional sports helmets i.e. for motorcar, motorcycle racing and even fighter jet helmets which require high level safety standards. Second, at the other end of the spectrum are manufacturers who produce large numbers of 'light use' helmets for everyday use, such as bicycle, motorcycle, or equestrian helmets, which are produced at low cost which only need to satisfy basic safety standards. There are different safety standards required for 'light use' and 'professional use' helmets, and therefore professional and light use helmets are typically manufactured *via* different processes. This is also reflected in the large price difference between the different types of helmets. Therefore, it would be commercially advantageous to produce a helmet, which can satisfy both markets, that is, meet the safety requirements for 'professional use' helmets and yet be produced using high volume manufacturing techniques, to allow a high performance helmet to be produced at a competitive price for the light use market.

There are a number of desirable features, which should be considered when designing safety helmets in general, these include:
- must be lightweight and have a stiff outer impact shell,
- moment of inertia must be low, which is achieved by lowering the stand-off distance from the head, this in turn aids mass reduction,
- centre of gravity must positioned correctly,
- should fit securely on the wearers head to prevent movement, especially during an impact, and
- must be comfortable and continue to afford adequate impact protection.
Further it will also be desirable to have a means of fastening securely other items onto the helmet, such as a chin strap or visor, therefore during the moulding process suitable fastening positions may have to be incorporated into the design.

Safety helmets are designed to provide protection from different types of impact; high energy impact events, which result from accidents, and softer low energy impacts i.e. when the helmet is knocked by the user. It is therefore essential that the helmet can respond to both hazard types, because if the low energy impacts were neglected then permanent damage may occur to the high energy impact foam. Therefore it is usually desirable -to fit a soft 'shape memory' foam to provide; protection from low energy impacts, and also to reduce 'jerk' (the rate of change of deceleration) during high energy impacts. The 'shape memory' nature of the soft foam means it can absorb small amounts of energy and recover to its original dimensions many times without degradation, unlike the high energy impact foam, which upon impact will deform irreversibly.

Sandwich core technology lends itself well to this type of low mass high strength application. A sandwich core will comprise a resilient material such as foam, which is sandwiched between two outer layers, which are typically hard and stiff. The sandwich core will provide a high level of stiffness compared to a conventional 2 layer approach, which allows the energy to be dissipated over a larger area of resilient material and thus will decrease the energy at the users head. It is known that for this type of structure that stiffness of the sandwich increases with the cube (third power) of the thickness of the sandwich. The sandwich structure can be produced from simple materials and when combined in a sandwich can have a stiffness value greater than modem high performance materials on their own.

However, there still remain a number of technical problems in producing sandwich core helmets using mass production techniques, especially if a high dimensional tolerance is also required. EP Patent 0650333 details the use of a sandwich type structure where an outer layer, which is comprised of either a resin and fabric or a pre-impregnated fabric, is placed in a female mould and pressed into place by hand. Afterwards the resilient layer and inner layer are loaded into the mould with hand pressing at each stage. The resilient material is defined as a flat sheet of either honeycomb, foam or cork. The problem with this method is that it requires each individual layer to be pressed by hand at each stage to ensure that it conforms correctly to the female mould, which is a time consuming process. A further problem arises when you press the flat sheet of foam under final consolidation pressure, as the foam will not conform properly to the mould shape and thus will decrease the dimensional tolerance of the finished helmet. Finally the consolidated helmet has to be finished, such as cutting out the opening for the visor.

FR Patent 2561877 describes the use of a sandwich type structure, which is limited to using a honeycombed resilient core to form the sandwich, again the resilient core material is loaded into the press in a flat sheet and so will encounter the same manufacturing problems, as above.

US Patent 4075717, describes the manufacture of a safety helmet where an inner and outer layer are pre-formed, which are bonded together to form a hollow shell which is filled with a self expanding polymer. However, there are complications associated with this method from a manufacturing point of view, because the shell layers would have to be supported structurally during the Expanded Polystyrene (EPS) foaming process, adding an additional complex process step and giving rise to further manufacturing costs.

Accordingly it is an object of the present invention to provide a polymer composite sandwich safety helmet, which can meet the safety standards and dimensional tolerances required for professional users and can also be produced using mass manufacturing methods, to provide a low cost, lightweight safety helmet.

Accordingly the present invention provides a process for the production of a safety helmet which comprises an energy dispersive polymer composite sandwich structure, comprising the steps of;
a) introducing into a mould a first layer comprising at least one piece of fabric, a second layer comprising a pre-formed energy dispersive material comprising a pre-formed foam, a third layer comprising at least one piece of fabric and a curable polymer material in contact with at least said first and third layers;
b) curing the polymer material such that first and third fibre reinforced polymer layers are formed encapsulating the second layer, and consolidating the layers such that the three layers act as one material.

For the purposes of this specification the term "pre-formed" shall be taken to mean that the energy dispersive material has been substantially shaped as required. Thus the method of the present invention need not shape the energy dispersive material to any great degree, unlike the prior art methods mentioned above. The first and third polymer reinforced fibre layers are shaped and formed during the method of the present invention.

Advantageously, the inventor has found that the use of a pre-formed energy dispersive material in conjunction with appropriately selected inner and outer layers, allows for the mass production of safety helmets which are suitable for both 'professional use' and 'light use'. A further advantage is that it is possible to achieve a mass reduction of up to 50% compared to currently available light use helmets and at least a 30% mass reduction compared to certain current professional use helmets.

Further the use of a pre-formed energy dispersive material can provide a high level of accuracy and dimensional tolerance, which is required for professional use helmets, compared to traditional polymer composite sandwich manufacturing techniques.

A further advantage is that the use of a pre-formed energy dispersive material provides a template for the final shape of the inner layer, therefore allowing the inner and outer layer to have different surface attributes, such as shape, contours or textures.

A still further advantage is that the use of a pre-formed energy dispersive material allows the helmet to be manufactured without any significant finishing being required, such that for re-entrant shaped helmet the visor opening section may be formed in-situ.

The fibre reinforced polymer which comprises the first (outer) layer and third (inner) layer may be produced from a plurality of layers of a strong fabric which are coated in a liquid curable resin. A convenient method of achieving the desired thickness of the first or third layer is to lay alternate pieces of fabric substantially orthogonal to each other, as the weft and the weave have different strength characteristics, thus producing the maximum strength. The fabric can be any high strength fabric, which may be woven into a twill, for instance carbon fibre, glass fibre or aramid fibre. It will be clear to the skilled man that the first and third layers can be produced using either the same or different fibre reinforced polymers and/or fabric materials, to achieve different mechanical and aesthetic properties.

One convenient method is to apply the desired number of fabric layers directly to the second layer, pre-formed energy dispersive material which, when cured in a resin, will form the first and third fibre reinforced layers. The layers of fabric may be attached to the energy dispersive material by any suitable adhesive to keep the fabric in position. This allows the energy dispersive medium and the fabric to be inserted as one unit rather than laying in separate layers in a step wise process.

The curable resin which will form the hard surface of the polymer may be cured by any suitable means such as heat or UV. The resin may be chosen from any resin, which, when cured provides strong, stiff and durable shell, such resins may include polyester, polyurethane, epoxy, polybutylene, polyamide or vinyl ester, preferably a polyester, polyurethane or epoxy resins are selected due to their good mechanical properties.

The first and third fibre reinforced polymer layers may or may not be the same thickness, the first (outer) layer may have a thickness in the range between 0.2 to 6.0mm, preferably 0.2 to 4mm, even more preferably 0.2 to 1 mm. The third layer may have a thickness between 0.1 to 4.0 mm, preferably 0.1 to 1 mm. The thickness of the layer will be selected depending on the type of helmet and the associated safety standards that need to be achieved. The selected thickness will however need to provide sufficient surface stiffness and strength and ideally have a low mass.

In a preferred arrangement the first layer is produced from at least two layers of fabric and the third layer is produced from at least one layer of fabric. It will be clear to the skilled person that one or both of the first or third layers may be produced from a fabric which is pre-impregnated with a curable resin, however an additional means of bonding may be required.

The second layer is a pre-formed energy dispersive material, which may be selected from a large number of resilient materials. The pre-formed energy dispersive material may be manufactured to the substantially final or final shape of the desired helmet shape. Furthermore the energy dispersive material may be at the substantially final or final density, thickness or volume as required, such that the first and third layers substantially adopt the shape of the pre-formed energy dispersive material. Therefore the pre-formed energy dispersive material may reduce the requirement for further processing steps to complete the helmet, such as reducing the need for further curing steps or excessive cutting to produce openings, for visors etc.

The preferred pre-formed energy dispersive materials are pre-formed foams, such foams may include polystyrene, polyurethane, polyethylene, polypropylene, polybutylene, polyvinylchloride or polymethacrylimide. The foam may be manufactured to the desired shape, density, thickness, by any suitable processing means. The energy dispersive foam is designed to withstand high energy impact events. The helmets final shape and size will be determined by the dimensions of the pre-formed foam. If the helmet is for a bespoke fitting for professional use, then the foam may be designed and fitted according to the wearers head dimensions, alternatively if the helmet is to be mass produced then a range of common helmet sizes may be produced.

The foams may be expanded to a density in the range of 25-120kg/m³, preferably in the range of 50-100kg/m³, the density will be selected depending on the selection of the energy dispersive foam and the application of the helmet. The energy dispersive foam will have a thickness in the range of 3.0-25.0mm, preferably it will be in the range of 7.0-15.0mm.

One convenient material for use as the pre-formed energy dispersive foam is expanded polystyrene(EPS), due to its low cost, good impact properties and its ease of use and handling during most manufacturing techniques. However there is a compatibility problem, when using EPS and polyester resins together, in that they chemically react, thereby degrading the strength of the composite. Therefore it is desirable to apply a barrier or membrane between the layers to prevent a chemical reaction. One such barrier would be an epoxy resin, which can also be used as a further means of adhesion to bond the polymer composite sandwich together.

It is desirable that the barrier entirely covers the EPS foam, as any untreated areas may react with the polyester resin, therefore to help ensure complete coverage. It may be desirable to add a spectroscopically active compound to the epoxy adhesive to monitor the application. The spectroscopic compound can be a coloured dye or a transition metal complex, which will ideally have its wavelength in the visible region. Other wavelengths in the UV or IR region can be selected, however they may be difficult to distinguish from the EPS and epoxy resin chemical spectra. It is to be understood that for mass production methods it may be desirable to use spectroscopic detectors to monitor the application of the epoxy. The epoxy can be applied to the foam core by a number of methods, including spraying, dipping or brushing, the method chosen depends on the type of production facility.

The preferred combinations of resin and energy dispersive foam are:

| **Resin** | **Energy dispersive foam** |
|---|---|
| Polyester | Polyurethane |
| Polyester | Polystyrene* |
| Vinylester | Polyurethane |
| Vinylester | Polystyrene |
| Epoxy | Polyurethane |
| Epoxy | Polystyrene |
| Polyurethane | Polyurethane |
| Polyurethane | Polystyrene |

| | |
|---|---|
| * denotes a desirability for a barrier between the resin and the foam | |

For non re-entrant shaped helmets the pre-formed foam can be located in the mould in one piece, as the mould is fully accessible. However, for re-entrant shaped helmets, the mould will have a smaller aperture diameter for the helmet opening, which is where the users head will fit through on the final article.

When producing a re-entrant shaped helmet, the mouth of the female mould will have a smaller diameter than the other parts of the helmet. The inventors of the present invention have advantageously found that if the energy dispersive material is constructed from a plurality of pieces, then the energy dispersive layer can be inserted in to the mould and assembled to form a complete layer. Clearly there is little advantage if an excessively large number of pieces were used as it would be too laborious to assemble all the pieces together. It has been found that at least three interconnecting pieces; for example a main, left and right piece, are easily handled and are of a small enough size to be inserted through the mouth of the female mould.

To prevent the foam core from moving in the mould, the abutting edges are suitably shaped such as to produce a locking engagement for the foam pieces within the mould. The locking engagement may be provided by chamfering the edges or by the use of a key and co-operative recess, such as a tongue and groove. Further, it may be desirable that for both non re-entrant and re-entrant foam cores, that the remaining (non abutting) edges are chamfered or tapered to facilitate where necessary the encapsulation by the first and third fibre reinforced polymer layers.

Furthermore if the fabric layers, which are to form the first and third fibre reinforced polymer layers, are adhered to the plurality of interconnecting pieces of energy dispersive material, it allows the separate pieces of the energy dispersive material to be held together, but also sufficiently flexible such that the energy dispersive material and fabric layers may be passed through the mouth of a re-entrant female mould.

This presents a clear advantage in that unskilled workers may assemble the energy dispersive material and adhere the required number of pieces of fabric to said energy dispersive material, such that the it reduces the number of steps required from the skilled operators of the consolidation apparatus, such as a bladder press.

The helmet may have a variety of sandwich structure profiles throughout the design. There may be areas, where the energy dispersive material will be completely encapsulated on all faces such as at the top of a visor opening area. There may also be areas where the sandwich has an open face, such that it is possible to see the discrete layers, such as at the vent holes or mounting holes, and further there may be regions where there is no energy dispersive material and only fibre reinforced polymer layers or even just resin, such as at some of the edges of the helmet. The sandwich structure, whether it is open faced or totally encapsulated, possesses the same strength and stiffness properties.

The helmet, depending on its use and hence the degree of protection required, may optionally require a shock attenuating layer and/or a comfort layer. The shock attenuating layer when present may be abutted to the third (inner) layer, by any suitable means, such as an adhesive, such that during use the shock attenuating layer absorbs further energy from the impact. The shock attenuating layer may be selected from any of the energy dispersive materials as hereinbefore defined, and may or may not be pre-formed. The selection of the energy dispersive material and its physical properties such as density and thickness, may be selected depending on the use of the helmet. The density may be in the range of from 10 to 120 kgm⁻³ and may be in a thickness in the range of from 5 to 30 mm.

The comfort layer, when present, may be fixed to the third layer or shock attenuating layer by any suitable means. The comfort layer, may comprise a degree of 'shape memory', such that for small deformations the layer will return to its original position, which will prevent the premature degradation of the other layers when present. The use of plastic and material lattices to provide comfort and protection from minor impacts are well known in the field of helmet design and as such are typically found in non-re-entrant shaped helmets such as building site, cricket and equestrian helmets. Re-entrant shaped helmets in general and some non re-entrant helmets, such as bicycle helmets, use low density foam to provide the necessary properties of the comfort layer. For re-entrant shaped helmets a close fit is often required, which is best achieved by the use of low density foams, as it would be difficult to achieve a uniform lattice of material for a re-entrant shaped helmet. The comfort layer may be selected from any of the energy dispersive materials as hereinbefore defined. It will be clear to the skilled man a single layer could be provided which provides both additional shock attenuation and comfort.

The invention therefore provides a relatively simple and inexpensive process for making comparatively low mass helmets. It also relates to helmets so produced and so in another aspect of the invention there is provided a helmet produced by the process described above. The invention also relates to the use of such a helmet as a means for mitigating head traumas.

The invention relates to safety helmets although it is conceivable that the invention could be used for other types of protective garments either as pieces of padding or can be integral parts of larger garments, to protect a vulnerable area of the body such as the elbow, knee, thigh, shin, hand or foot, this list is not an exhaustive list and only serves to highlight some of the other areas which may be considered, when designing protective clothing.

The present invention can provide a safety helmet comprising an outer substantially rigid polymer composite sandwich structure, and an optional inner comfort liner, wherein the composite structure comprises a first outer layer comprising a fibre reinforced polymer to form a hard outer surface to the helmet, a second layer of a pre-formed energy dispersive material, which is formed from at least three interconnecting pre-cast sections wherein the abutting edges are chamfered to produce a means of locking engagement for the sections, and a third inner layer comprising a fibre reinforced polymer to form a hard inner surface, wherein the first and third layers substantially encapsulate the second pre-formed layer and wherein the three layers are bonded together.

The invention will now be further described with reference to the accompanying drawings in which figures 1 to 4 represent the components of a re-entrant shaped helmet where:-
Figure 1 is a representation of the first (outer) layer, which is produced from a 400gsm twill fabric and polyester resin
Figure 2 is a representation of the third (inner) layer, which is produced from a 400gsm twill fabric and polyester resin
Figure 3 is a representation of the impact foam core, which is produced from an EPS material.
Figure 4 is a representation of inner comfort liner, which is produced from an EPS material.

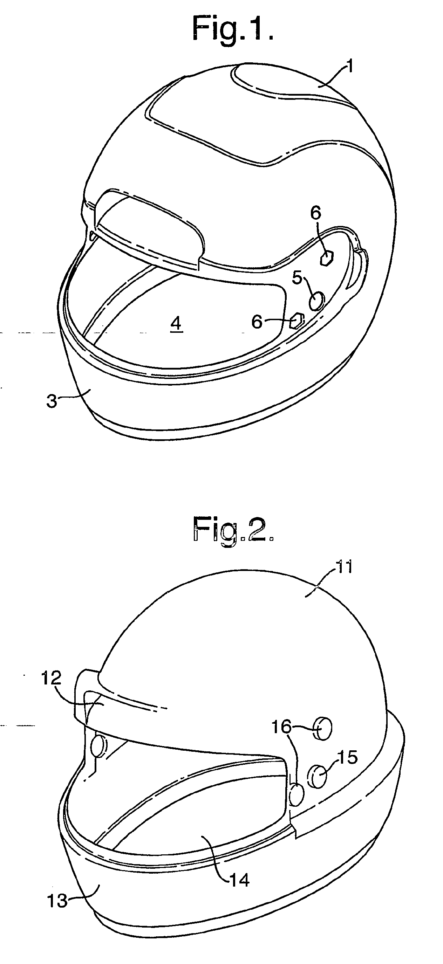

Figure 1 is a representation of the first fibre reinforced polymer layer. The female mould (not shown) will have a series of positive and negative embossments which will produce the surface topography of the first (outer) layer. The key features of the layer are the dome section which houses the top vent recess (1), and the forehead vent recess (2), which is also used as a means of aligning the energy dispersive material in the female mould. There is a further vent in the chin bar area (3), the vents (1, 2, 3) are designed to ensure sufficient air can circulate inside the finished helmet. The visor section (not shown) will be located in the cut out area (4) and will be secured and hinged at the respect anchorage points (6), which are located on both sides of the helmet. The chinstrap (not shown) will be secured at the attachment hole (5), with an identical fixing point located on the other side of the helmet (not shown). The attachment holes (5,6) are milled at the final helmet finishing stage, to ensure correct alignment.

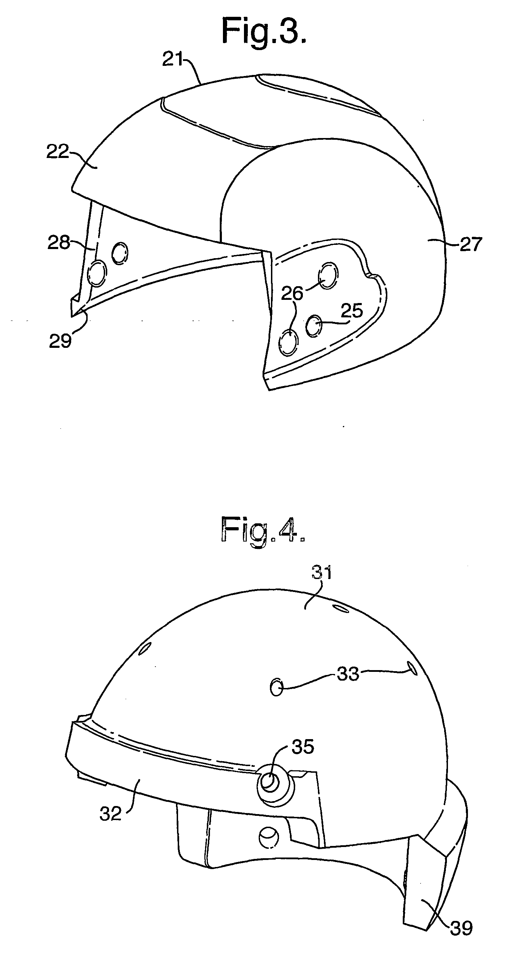

Figure 2 is a representation of the third fibre reinforced polymer layer. The energy dispersive material (as shown in figure 3) will behave as a female mould for the third (inner) layer, the energy dispersive material will have a series of positive and negative embossments which will produce the final surface topography of the third layer. The key features of the first layer are usually similar to those of the first layer, the dome section (11), the forehead vent recess (12) and a further vent on the chin bar area (13), which will align with the respective vents on the first (outer layer). The visor section (not shown) will be located in the cut out area (14) and will be secured and hinged at the respect anchorage points (16). The chin strap (not shown) will be secured at the attachment hole (15). The attachment holes (15, 16) may be milled at the final helmet stage, to ensure correct alignment. After consolidation in the bladder press the shock attenuating (and or comfort foam layer not shown) as shown in figure 4, will be bonded to the inside of the third layer.

Figure 3 shows the second layer which is the pre-formed energy dispersive foam . To facilitate the loading of the foam into the mould it has been made from three interconnecting pieces, those being the main dome section (21), the left section (27) and the right section (28), these sections are aligned in the mould by using the forehead vent recess (22) as a reference point. To reduce the incidence of movement or slippage of the three interconnecting pieces the abutting edges are chamfered, additionally the external edges (29) are chamfered, to allow the first and third layers of the laminate to easily encase the foam . Further the visor section (not shown) and the chin bar are not clearly defined as these areas will not utilise the sandwich core technology, however the respect anchorage points for the visor (26) and chin strap (25) are detailed on the foam core.

Figure 4 shows the profile of the shock attenuating layer. The large dome area (31) contains a number of ventilation holes (33) to allow air to flow around the inside of the helmet, and further forehead vent hole (32), which will be aligned to the respective forehead vent holes (2, 12 and 22). The shock attenuating layer will be secured to the main polymer composite sandwich in a separate bonding process, however to assist in the correct location of the of the shock attenuating layer there is a snap fit attachment point (35) which will locate with a corresponding lug on the third layer (not shown).

Examples of re-entrant helmets which have been developed using this technology are motorsport and fighter jet helmets, which possess a means for attaching peripherals such as a visor and chin strap and the design must also incorporate vent holes to allow air to circulate inside the helmet and in the case of the jet fighter helmet the HMD has also been incorporated.

A typical process for the production of a re-entrant shaped helmets is described below.

The first (outer) layer is formed by applying a portion of curable resin onto the surface of the female mould by any known means such as spraying or brushing, and laying the desired number of pieces of fabric into the resin. The resin may also be applied directly to the fabric which forms the first layer prior to it being loaded into the female mould. At least one piece of fabric will form the dome area of the helmet and at least one further piece of fabric may be used to form a lower chin bar area (if present), there will be at least two layers of material in the first (outer) layer, although more may be required to produce the desired thickness. It is desirable that each layer of fabric which forms the first or third fibre reinforced polymer layer is produced from one piece of fabric, such that each piece of fabric is sufficiently large enough to cover the entire surface area of the energy dispersive material, rather than overlapping several smaller pieces of fabric together, this helps to prevent any weakness points in the final product.

By way of an example only, the current in service specification for a fighter jet safety helmet has a mass of approximately 1.4 kg, whereas compared to a helmet produced by the present invention, constructed to meet the same safety and high dimensional tolerance requirements will have a mass of only 1.0 kg; this equates to at least a 28% reduction in mass. This reduction becomes significant when the pilot undergoes a high 'g' manoeuvre, as this will greatly reduce the strain on the pilot's neck.

By way of a further example for a motorsport helmet, a typical helmet in the mass production market for a light user will have a mass between 1.4-2kg, even professional helmets such as Formula 1, have a mass of greater than 1.2kg, whereas compared to a safety helmet produced for motorsports by the current invention will have a mass in the range 700-1000 grams, which gives rise to a greater than 50% reduction in mass, for certain helmets, when compared to the equivalent mass produced helmet.

The type of press and the tooling required depends on whether the helmet has a re-entrant shape The tooling required for non re-entrant shaped helmets is relatively simple, as you only require a simple one piece mould and a corresponding mandrel to provide a means of consolidation. Whereas for a re-entrant shape, the consolidation tooling is more complex, with the requirements of a split mould and bladder type consolidation presses. It is also possible to use a vacuum forming process, for either helmet shape, such that the components are loaded into a female mould with a suitable former, which can be either a hard mandrel or a suitable high strength vacuum bag, the loaded mould and former are subjected to a vacuum and heated to at least 40°C to afford consolidation.

The consolidation stage must ensure that the cured resin and the impact core form a strong uniform structure. The stiffness and strength of the sandwich relies on the synergy of the three layers acting as one material and not as three independent materials.

The next stage in processing the helmet is to ensure that the helmet is ready both functionally and aesthetically. This includes ensuring that edges of the helmet are finished to a high quality, by removing any excess material, from the sides of the helmet. The use of a pre-shaped foam for the re-entrant shaped helmet means that the space where the visor will be located is already formed, such that no further cutting or processing is required, which potentially may give rise to structural weakness in the finished helmet. It may be desirable to place a finishing trim around certain edges of the helmet to provide an aesthetic finish. The mounting holes for the visor, chinstrap and other peripherals may be drilled or even pre-formed, and the relevant components fitted. Finally the venting plates need to be attached and any surface decoration such as transfers, paint or finishing fabrics, such as felt for equestrian helmets, can be applied.

A further stage is to mount any required peripheral items onto the helmet, these include were applicable visors, chinstraps, lights, and reflectors. A further feature, which can be mounted on the helmet is a Head Mounted Display (HMD), due to the relative cost of the technology at present this is only likely to be incorporated onto a military fighter jet helmet, however it is possible that HMD's will be provided on motorsports helmets If an HMD is to be used, the helmet must possess a high degree of dimensional tolerance, as the helmet will act as an optical bench and thus stability and alignment of the helmet and the users eye-line are critical.

## Claims

1. A process for the production of a safety helmet which comprises an energy dispersive polymer composite sandwich structure, comprising the steps of;
a) introducing into a mould a first layer comprising at least one piece of fabric, a second layer comprising a pre-formed energy dispersive material comprising a pre-formed foam, a third layer comprising at least one piece of fabric and a curable polymer material in contact with at least said first and third layers;
b) curing the polymer material such that first and third fibre reinforced polymer layers are formed encapsulating the second layer, and consolidating the layers such that the three layers act as one material.

2. A process as claimed in claim 1 wherein the first layer and some curable polymer material are introduced into the mould prior to introduction of the second layer and the third layer and some curable polymer material are introduced into the mould subsequent to the introduction of the second layer.

3. A process as claimed in claim 1 wherein the first layer of fabric is bonded to the second layer prior to introduction into the mould.

4. A process as claimed in claim 3 wherein some curable polymer material is introduced into the mould prior to introduction of the bonded first and second layers.

5. A process as claimed in any of claims 3 or 4 wherein the third layer of fabric is bonded to the second layer prior to introduction to the mould.

6. A process as claimed in claim 5 wherein at least some curable polymer material is applied to the third layer after it is bonded to the second layer.

7. A process as claimed in claim 6 wherein the curable material applied to the third layer is applied after the third layer has been introduced into the mould.

8. A process according to any one of the preceding claims wherein each of the first and third layers comprise in the range of from 1 to 4 sheets of fabric.

9. A process according to any one of the preceding claims, comprising attaching a fourth shock attenuating layer to the energy dispersive polymer composite sandwich structure product.

10. A process according to claim 9, wherein the fourth shock attenuating layer comprises at least one energy dispersive material.

11. A process according to any one of the preceding claims, comprising fixing a fifth comfort liner to the third or fourth layer.

12. A process according to any one of the preceding claims wherein the second pre-formed energy dispersive layer is formed from at least three interconnecting sections.

13. A process according to claim 12 wherein the interconnecting sections comprise a means of locking engagement.

14. A process according to claim 13 wherein the means of locking engagement is provided by chamfered abutting edges or are joined by means of a protrusion and co-operative recessed portion.

15. A process according to any one of the preceding claims wherein the energy dispersive material is polystyrene foam and the method further includes the step of applying a barrier between the polystyrene foam and curable resin to prevent chemical reaction.

16. A process according to claim 15 wherein the barrier contains a spectroscopically active compound to monitor the application.

17. A process according to claim 15 or claim 16 wherein the barrier is applied to the foam by means of spraying, dipping or brushing.

18. A process according to claim 17, wherein the barrier is uniform and impervious and is formed from an epoxy adhesive.

19. A helmet obtainable by a process according to any one of the preceding claims.

20. A helmet according to claim 19, wherein the helmet, further incorporates mountings for at least one of the following, chin strap, visor, illumination unit, reflector or head mounted display.

## Patentansprüche

1. Verfahren zur Herstellung eines Schutzhelms, der eine energiedispersive Polymercomposit-Sandwichstruktur aufweist, das folgende Schritte umfasst:
a) Einbringen einer ersten Schicht, die mindestens ein Stück Gewebe aufweist, einer zweiten Schicht, die ein vorgeformtes energiedispersives Material darstellt, das ein vorgeformter Schaum ist, einer dritten Schicht, die mindestens ein Stück Gewebe aufweist, sowie eines härtbaren Polymermaterials in Kontakt mit zumindest der ersten und der dritten Schicht in eine Form,
b) Härten des Polymermaterials, sodass eine erste und eine dritte faserverstärkte Polymerschicht gebildet werden, welche die zweite Schicht zwischen sich einschließen, und Verfestigen der Schichten, sodass sich die drei Schichten als ein Material verhalten.

2. Verfahren nach Anspruch 1, bei dem vor dem Einbringen der zweiten Schicht die erste Schicht und etwas härtbares Polymermaterial in die Form eingebracht werden und die dritte Schicht und etwas härtbares Polymermaterial im Anschluss an das Einbringen der zweiten Schicht in die Form eingebracht werden.

3. Verfahren nach Anspruch 1, bei dem die erste Schicht aus Gewebe vor dem Einbringen in die Form mit der zweiten Schicht verbunden wird.

4. Verfahren nach Anspruch 3, bei dem vor dem Einbringen der miteinander verbundenen ersten und zweiten Schicht etwas härtbares Polymermaterial in die Form eingebracht wird.

5. Verfahren nach Anspruch 3 oder 4, bei dem die dritte Schicht aus Gewebe vor dem Einbringen in die Form mit der zweiten Schicht verbunden wird.

6. Verfahren nach Anspruch 5, bei dem mindestens etwas härtbares Polymermaterial auf die dritte Schicht aufgebracht wird, nachdem sie mit der zweiten Schicht verbunden wurde.

7. Verfahren nach Anspruch 6, bei dem das härtbare Material, das auf die dritte Schicht aufgebracht wird, nach dem Einbringen der dritten Schicht in die Form aufgebracht wird.

8. Verfahren nach einem der vorhergehenden Ansprüche, bei dem die erste Schicht und die zweite Schicht jeweils 1 bis 4 Lagen Gewebe aufweisen.

9. Verfahren nach einem der vorhergehenden Ansprüche, welches das Anbringen einer vierten, Stöße dämpfenden Schicht am Produkt mit der energiedispersiven Polymercomposit-Sandwichstruktur umfasst.

10. Verfahren nach Anspruch 9, bei dem die vierte, Stöße dämpfende Schicht mindestens ein energiedispersives Material aufweist.

11. Verfahren nach einem der vorhergehenden Ansprüche, das die feste Anbringung einer fünften Schicht, die eine Komfortauskleidung darstellt, an der dritten oder vierten Schicht umfasst.

12. Verfahren nach einem der vorhergehenden Ansprüche, bei dem die zweite, vorgeformte energiedispersive Schicht aus mindestens drei untereinander verbundenen Abschnitten hergestellt wird.

13. Verfahren nach Anspruch 12, bei dem die untereinander verbundenen Abschnitte Mittel zum sicheren Eingriff miteinander aufweisen.

14. Verfahren nach Anspruch 13, bei dem die Mittel zum sicheren Eingriff miteinander durch abgeschrägte aneinandergrenzende Ränder oder durch Verbindung mittels eines vorspringenden Bereichs und eines damit zusammenwirkenden Ausnehmungsbereichs gebildet werden.

15. Verfahren nach einem der vorhergehenden Ansprüche, wobei das energiedispersive Material Polystyrolschaum ist und das Verfahren ferner den Schritt des Aufbringens einer Barriere zwischen dem Polystyrolschaum und dem härtbaren Harz umfasst, um eine chemische Reaktion zu verhindern.

16. Verfahren nach Anspruch 15, bei dem die Barriere eine spektroskopisch aktive Verbindung enthält, um das Aufbringen zu überwachen.

17. Verfahren nach Anspruch 15 oder 16, bei dem die Barriere durch Sprühen, Tauchen oder durch Pinselauftrag auf den Schaum aufgebracht wird.

18. Verfahren nach Anspruch 17, bei dem die Barriere gleichmäßig und undurchlässig ist und aus einem Epoxykleber hergestellt ist.

19. Helm, erhältlich nach einem Verfahren nach einem der vorhergehenden Ansprüche.

20. Helm nach Anspruch 19, wobei der Helm ferner Halterungen für einen Kinnriemen, ein Visier, eine Beleuchtungseinheit, einen Reflektor und/oder eine oben angebrachte Anzeige aufweist.

## Revendications

1. Procédé de production d'un casque de sécurité qui comprend une structure sandwich composite polymère à dispersion d'énergie, comprenant les étapes consistant à :
a) introduire dans un moule une première couche comprenant au moins une pièce de tissu, une deuxième couche comprenant un matériau préformé à dispersion d'énergie comprenant une mousse préformée, une troisième couche comprenant au moins une pièce de tissu et un matériau polymère pouvant être durci en contact avec au moins lesdites première et troisième couches ;
b) durcir au four le matériau polymère de sorte que des première et troisième couches polymère renforcées par des fibres soient formées enrobant la deuxième couche, et à grouper les couches afin que les trois couches agissent comme un seul matériau.

2. Procédé selon la revendication 1, dans lequel la première couche et un matériau polymère pouvant être durci sont introduits dans le moule avant l'introduction de la deuxième couche et la troisième couche et un matériau polymère pouvant être durci sont introduits dans le moule après l'introduction de la deuxième couche.

3. Procédé selon la revendication 1, dans lequel la première couche de tissu est liée à la deuxième couche avant l'introduction dans le moule.

4. Procédé selon la revendication 3, dans lequel un matériau polymère pouvant être durci est introduit dans le moule avant l'introduction des première et deuxième couches liées.

5. Procédé selon l'une quelconque des revendications 3 ou 4, dans lequel la troisième couche de tissu est liée à la deuxième couche avant l'introduction dans le moule.

6. Procédé selon la revendication 5, dans lequel au moins un matériau polymère pouvant être durci est appliqué sur la troisième couche après qu'elle a été liée à la deuxième couche.

7. Procédé selon la revendication 6, dans lequel le matériau pouvant être durci appliqué sur la troisième couche est appliqué après que la troisième couche a été introduite dans le moule.

8. Procédé selon l'une quelconque des revendications précédentes, dans lequel chacune des première et troisième couches est comprise dans la plage allant de 1 à 4 feuilles de tissu.

9. Procédé selon l'une quelconque des revendications précédentes, comprenant la fixation d'une quatrième couche amortissant les chocs sur le produit ayant une structure sandwich composite polymère à dispersion d'énergie.

10. Procédé selon la revendication 9, dans lequel la quatrième couche amortissant les chocs comprend au moins un matériau à dispersion d'énergie.

11. Procédé selon l'une quelconque des revendications précédentes, comprenant la fixation d'une cinquième doublure de confort sur la troisième ou la quatrième couche.

12. Procédé selon l'une quelconque des revendications précédentes, dans lequel la deuxième couche préformée à dispersion d'énergie est formée par au moins trois sections d'interconnexion.

13. Procédé selon la revendication 12, dans lequel les sections d'interconnexion comprennent un moyen d'accouplement par verrouillage.

14. Procédé selon la revendication 13, dans lequel le moyen d'accouplement par verrouillage est fourni par des arêtes chanfreinées en about ou est assemblé au moyen d'une saillie et d'une portion évidée coopérante.

15. Procédé selon l'une quelconque des revendications précédentes, dans lequel le matériau à dispersion d'énergie est une mousse de polystyrène et le procédé comprend en outre l'étape consistant à appliquer une barrière entre la mousse de polystyrène et la résine pouvant être durcie afin d'empêcher une réaction chimique.

16. Procédé selon la revendication 15, dans lequel la barrière contient un composant spectroscopiquement actif pour surveiller l'application.

17. Procédé selon la revendication 15 ou la revendication 16, dans lequel la barrière est appliquée sur la mousse par pulvérisation, immersion ou badigeonnage.

18. Procédé selon la revendication 17, dans lequel la barrière est uniforme et imperméable et est formée à partir d'une colle époxyde.

19. Casque pouvant être obtenu par un procédé selon l'une quelconque des revendications précédentes.

20. Casque selon la revendication 19, dans lequel le casque comprend en outre des fixations pour au moins l'un des éléments suivants, à savoir une jugulaire, une visière, une unité d'éclairage, un réflecteur ou un dispositif d'affichage tête haute.
